# EUROPÄISCHE PATENTSCHRIFT

(11) **EP 4 256 178 B1**
(45) Veröffentlichungstag und Bekanntmachung des Hinweises auf die Patenterteilung: **08.01.2025**
(21) Anmeldenummer: 21820165.5
(22) Anmeldetag: 24.11.2021
(51) Int. Cl.: F01D 9/02, F01D 15/02, F01N 3/20, F01N 3/28

(54) **ABGASTURBOLADER MIT KATALYSATOR UND EINEN SOLCHEN AUFWEISENDES HYBRIDFAHRZEUG**
TURBOCHARGER WITH A CATALYTIC CONVERTER, AND HYBRID VEHICLE HAVING SUCH A TURBOCHARGER
TURBOCOMPRESSEUR DOTÉ D'UN CONVERTISSEUR CATALYTIQUE, ET VÉHICULE HYBRIDE ÉQUIPÉ D'UN TEL TURBOCOMPRESSEUR

(30) Priorität: 03.12.2020 DE 102020215307
(43) Veröffentlichungstag der Anmeldung: 11.10.2023
(73) Patentinhaber: Vitesco Technologies GmbH, 93055 Regensburg (DE)
(72) Erfinder: SLAVIC, Sasa, 80687 München (DE); EHRHARD, Jan, 80687 München (DE)
(74) Vertreter: Vitesco Technologies
(86) Internationale Anmeldenummer: PCT/EP2021/082845
(87) Internationale Veröffentlichungsnummer: WO 2022/117413

(56) Entgegenhaltungen:
- EP-A2- 2 818 640
- DE-A1- 102014 003 390
- DE-A1- 102017 201 468
- US-A1- 2013 014 503

## Beschreibung

Die vorliegende Erfindung betrifft einen Abgasturbolader für eine Brennkraftmaschine mit einem Verdichter und einer Turbine, wobei die Turbine ein Turbinengehäuse mit einem Abgaszuführstutzen, einem Abgasabführstutzen, einem Abgasringkanal und ein im Turbinengehäuse angeordnetes Turbinenrad aufweist.

Katalysatoren werden in einer Abgasanlage möglichst nah am Motor eingebaut, damit sie rasch ihre Betriebstemperatur erreichen und auch bei niedrigen Betriebstemperaturen (wie beispielsweise im Stadtverkehr) ihre Wirkung zeigen. Maßgeblich ist hier die Light-off-Temperatur des Katalysators, d.h. die Temperatur, bei der der Katalysator anfängt, Schadstoffe abzubauen.

Generell trifft dies auch auf Fahrzeuge zu, die mit einer durch einen Abgasturbolader aufgeladenen Brennkraftmaschine ausgestattet sind. Um ein rasches Anspringen des Katalysators und eine besonders gute katalytische Umwandlungsrate zu erreichen, wäre es hier von Vorteil, den Katalysator in Bezug auf den Abgasmassenstrom stromaufwärts der Turbine des Abgasturboladers, so nah wie möglich am Motorauslass anzuordnen. Dies trifft insbesondere zu, bei einem Einsatz der Brennkraftmaschine im Verbund mit einem elektromotorischen Antrieb, zum Beispiel in einem sogenannten Hybridfahrzeug. Hier kommt es durch die häufigen Stillstandsintervalle der Brennkraftmaschine immer wieder zur Abkühlung des Katalysators und somit zu einem vergrößerten Anteil von Betriebsphasen unterhalb der Anspringtemperatur des Katalysators und so zu einem erhöhten, inakzeptablen Schadstoffausstoß. Insbesondere also in diesem Zusammenhang ist eine Verkürzung der Aufheizzeit des Katalysators durch möglichst motornahe Anordnung, in Bezug auf den Strömungsweg des Abgasmassenstroms, wünschenswert.

Aufgrund des zusätzlichen Volumens und der Wärmekapazität hat jedoch ein stromaufwärts des Abgasturboladers angeordneter Katalysator negative Auswirkungen auf das Leistungsverhalten der Brennkraftmaschine insbesondere in transienten Lastwechselsituationen. Darüber hinaus führt ein stromaufwärts der Turbine des Abgasturboladers angeordneter Katalysator, der in Bezug auf das Kaltstartverhalten und die Emissionen vorteilhaft wäre, zu Druckverlusten und thermischen Verlusten, die eine Verschlechterung des Ansprechverhaltens in transienten Betriebsbereichen und des Verhaltens im unteren Drehmoment- bzw. Drehzahlbereich zur Folge haben. Um Auswirkungen auf das Betriebsverhalten zu verhindern, hat man daher bei herkömmlichen Kraftfahrzeugen eine Anordnung eines Katalysators stromaufwärts eines Turboladers vermieden und diesen daher stromabwärts des Turboladers vorgesehen. Soweit bekannt, sind bislang einem Turbolader vorgeschaltete Katalysatoren, d.h. stromaufwärts der Turbine angeordnete Katalysatoren, nur in stationären Anwendungsfällen eingesetzt worden. Bei Kraftfahrzeugen mit Brennkraftmaschinen bzw. Verbrennungsmotoren ist der Katalysator bislang in der Regel stromabwärts des Turboladers angeordnet worden, d.h. man hat negative Auswirkungen auf das Kaltstartverhalten und die Umwandlungsraten in Kauf genommen, um nachteilige Auswirkungen auf das Betriebsverhalten zu vermeiden.

Der vorliegenden Erfindung liegt die Aufgabe zugrunde, einen Abgasturbolader der eingangs beschriebenen Art zur Verfügung zu stellen, der besonders niedrige Emissionen einer zugehörigen Brennkraftmaschine bewirkt, sowie ein Hybridfahrzeug anzugeben, das sich durch einen besonders niedrigen Schadstoffausstoß auszeichnet.

Diese Aufgabe wird erfindungsgemäß bei einem Abgasturbolader und einem Hybridfahrzeug der angegebenen Art dadurch gelöst, dass stromaufwärts vor dem Turbinenrad des Abgasturboladers ein Katalysatorsubstratblock in den Abgasringkanal des Turbinengehäuse des Abgasturboladers integriert ist.

Die DE 10 2017 201468 A1 offenbart einen Turbolader für eine Brennkraftmaschine, aufweisend ein Lagergehäuse, in dem eine Läuferwelle drehbar gelagert ist; ein Turbinenrad, welches drehfest auf der Läuferwelle angeordnet ist; ein Turbinengehäuse, welches mechanisch an dem Lagergehäuse festgelegt ist; und einen derart stromabwärts des Turbinenrads angeordneten Ringkatalysator mit einem Katalysatorgehäuse, dass ein aus dem Turbinenrad austretender Abgasmassenstrom in den Ringkatalysator einströmen kann, wobei der Ringkatalysator zusammen mit dem Turbinengehäuse eine integrale Einheit bildet, wobei das Katalysatorgehäuse mit dem Turbinengehäuse verbunden so ist, dass zumindest ein Wandabschnitt des Turbinengehäuses von dem Abgasmassenstrom von zwei Seiten umströmt wird.

Die EP 2 818 640 A2 offenbart einen Turbolader, der ein Turbinenrad aufweist, das in einem Turbinengehäuse montiert und über eine Welle mit einem Verdichterrad verbunden ist. Das Turbinengehäuse definiert einen Abgaseinlass, der mit einer Spirale verbunden ist, die das Turbinenrad umgibt, und eine axiale Bohrung, durch die Abgas, das das Turbinenrad passiert hat, aus dem Turbinengehäuse abgeleitet wird. Das Turbinengehäuse bildet ferner einen ringförmigen Bypass-Kanal, der die Bohrung umgibt und so angeordnet ist, dass das Abgas das Turbinenrad umgehen kann. In dem Bypasskanal ist ein ringförmiges Bypassventil angeordnet. Das Bypassventil umfasst einen festen ringförmigen Ventilsitz und ein drehbares ringförmiges Ventilelement, das koaxial zum Ventilsitz angeordnet ist. In dem ringförmigen Bypasskanal ist ein Katalysator angeordnet. Der Katalysator besteht aus voneinander beabstandeten, wellenförmigen Metallrippen, die mit einem Katalysatormaterial beschichtet sind und sich in einem allgemein ringförmigen Käfig befinden.

Die US 2013/014503 A1 offenbart einen Turbolader und Luftansaugsysteme, insbesondere ein Turboladergehäuse mit einem integrierten Verdichtereinlasskanal und einem integrierten Turbinenauslasskanal. In einer Ausführungsform wird eine Gehäuseanordnung für ein Zwangsansaugsystem eines Verbrennungsmotors bereitgestellt. Das Gehäuse umfasst ein Turbinengehäuse, das ferner einen Turbineneinlasskanal umfasst, der in Fluidverbindung mit einer Turbinenspirale steht, die so konfiguriert ist, dass sie ein Turbinenrad aufnimmt, wobei der Turbineneinlasskanal so konfiguriert ist, dass er einen Abgasstrom von einem Abgaskrümmer des Verbrennungsmotors zu dem Turbinenrad leitet. Die Gehäusebaugruppe umfasst auch einen Turbinenauslasskanal, der in das Turbinengehäuse integriert ist, wobei der Turbinenauslasskanal in Fluidverbindung mit der Turbinenspirale steht und so konfiguriert ist, dass er den Abgasstrom zu einem Katalysator leitet, der mit dem Turbinenauslasskanal verbunden ist, wobei der Turbinenauslasskanal einen kegelförmigen Kanal umfasst. Ferner umfasst die Gehäusebaugruppe ein Verdichtergehäuse, das mit einem Verdichtereinlasskanal integriert ist, der in Fluidverbindung mit einer Verdichterspirale steht, die so konfiguriert ist, dass sie ein mit dem Turbinenrad gekoppeltes Verdichterrad aufnimmt, wobei der Verdichtereinlasskanal eine Wand umfasst, die mit der Verdichterspirale geteilt wird.

Die DE 10 2014 003390 A1 offenbart eine Antriebseinrichtung mit einer Brennkraftmaschine, mit einer an die Brennkraftmaschine angeschlossenen Abgasanlage, die eine Katalysator zur Reinigung von Abgas der Brennkraftmaschine aufweist, und mit einer als Brenner ausgebildeten Heizvorrichtung zum Beheizen des Katalysators. Dabei ist vorgesehen, dass eine Heißgasleitung des Brenners in ein Abgasturboladergehäuse eines Abgasturboladers der Brennkraftmaschine einmündet.

Im Gegensatz zum vorstehend erwähnten Stand der Technik sieht somit die erfindungsgemäße Lehre vor, einen Katalysator stromaufwärts des Turbinenrads des Abgasturboladers im Turbinengehäuse integriert anzuordnen, wie in den unabhängigen Ansprüchen beansprucht.

Der erfindungsgemäße Abgasturbolader für eine Brennkraftmaschine weist einen Verdichter und eine von einem Abgasmassenstrom durchströmbare Turbine auf, die zusammen entlang einer Turboladerachse angeordnet sind, wobei die Turbine ein Turbinengehäuse und ein im Turbinengehäuse angeordnetes Turbinenrad aufweist. Das Turbinengehäuse weist einen Abgaszuführstutzen, einen Abgasabführstutzen, der sich axial in Richtung der Turboladerachse erstreckt, und einen das Turbinenrad und den Abgasabführstutzen in Bezug auf die Turboladerachse umgreifenden Abgasringkanal auf. Dabei ist, bezogen auf den Abgasmassenstrom, stromaufwärts vor dem Turbinenrad und stromabwärts des Abgaszuführstutzens ein hohlkörperförmiger Katalysatorsubstratblock derart im Abgasringkanal in das Turbinengehäuse integriert, dass er den Abgasringkanal über seinen Umfang umlaufend ausfüllt und zusammen mit dem Abgasringkanal den Abgasabführstutzen umgreift.

Dadurch ist gewährleistet, dass der gesamte, stromaufwärts des Katalysatorsubstratblocks in den Abgasringkanal eingeleitete Abgasmassenstrom den Katalysatorsubstratblock durchströmen muss, bevor er auf das Turbinenrad trifft. Der Abgasringkanal sowie der Katalysatorsubstratblock erstrecken sich dabei in axialer Richtung zumindest über einen Teil des Abgasabführstutzens, wobei der Katalysatorsubstratblock den Abgasringkanal zwar über den Umfang umlaufend aber nicht notwendigerweise über dessen gesamte axiale Erstreckung ausfüllt. Die axiale Erstreckung des Katalysatorsubstratblocks kann dabei so dimensioniert werden, dass die Länge des Strömungsweges durch den Katalysatorsubstratblock, so bemessen ist, dass eine hohe Umwandlungsrate der Schadstoffe im Abgasmassenstrom gewährleistet ist.

Die hohlkörperförmige Ausführung des Katalysatorsubstratblocks umfasst dabei beispielsweise die Form eines geraden Hohlzylinders aber auch beispielsweise eine konisch verlaufende Hohlzylinderform, mit anderen Worten einen Hohlkegelstumpf, oder andere Hohlkörperformen, die geeignet sind zum Einbau in einen Abgasringkanal eines Turbinengehäuses.

Das erfindungsgemäße Hybridfahrzeug weist eine Brennkraftmaschine und Elektromotor auf und ist dadurch gekennzeichnet, dass die Brennkraftmaschine einen erfindungsgemäßen Abgasturbolader, wie vorausgehend und nachfolgend beschrieben aufweist.

Die erfindungsgemäße Ausgestaltung von Abgasturbolader und Hybridfahrzeug bringt eine Reihe von Vorteilen mit sich. Der Katalysator ist in das Turbinengehäuse integriert, so dass sich eine entsprechende Platzersparnis erreichen lässt. Ferner kann das volle katalytische Wandlervolumen stromaufwärts der Turbine des Abgasturboladers angeordnet sein, d.h. auf einen zweiten Katalysator stromabwärts des Abgasturboladers kann verzichtet werden. Auch kann eine spezielle Ausbildung des Turbinengehäuses für die Anströmung des Turbinenrades entfallen, da eine derartige Ausgestaltung auf den Katalysator übertragen werden kann, der für eine entsprechende Anströmung der Turbine sorgt. Die erfindungsgemäße Anordnung des Katalysators, integriert in das Turbinengehäuse ermöglicht die unmittelbare Anbindung des Katalysators zusammen mit dem Abgasturbolader and den Abgasauslasskrümmer der Brennkraftmaschine und ermöglicht so eine Minimierung der Strömungsweglänge zwischen Brennkraftmaschine, Katalysator und Turbolader sowie die Begrenzung der Energieverluste auf dem Strömungsweg auf ein Minimum. Dadurch wird sowohl eine schnelle Aufheizung des Katalysators auf seine Anspringtemperatur als auch ein verbessertes Ansprechverhalten des Abgasturboladers bei hoher Leistungsausbeute ermöglicht.

Bei der vorgenannten Ausführung des Abgasturboladers kann der Katalysatorsubstratblock in Form eines sogenannten Ringkatalysators ausgebildet sein, der die Form eines Hohlzylinders oder Hohlkelgelstumpfs aufweist, der in den Abgasringkanal eingefügt ist. Dies steht im Gegensatz zu herkömmlichen massiven zylindrisch oder konisch ausgebildeten Katalysatorsubstratblöcken. Die Ringform bzw. Hohlzylinderform oder Hohlkegelstumpfform hat hier besondere Vorteile, da der Katalysatorsubstratblock hierdurch vollständig in den das Turbinenrad und den Abgasabführstutzen umgreifenden Abgasringkanal des Turbinengehäuses integriert werden kann. Dies ermöglicht einen besonders kompakten Aufbau der Kombination aus Abgasturbolader und Katalysator.

Die erfindungsgemäße Ausführungsform hat ferner den Vorteil, dass der Katalysatoreinlass sehr nahe an dem Auslass der Brennkraftmaschine und der Katalysatorauslass sehr nahe am Turbinenrad angeordnet ist. Dies ist insbesondere dann auf kompakte Weise realisierbar, wenn der Katalysatorsubstratblock als Ringkatalysator ausgebildet ist.

Die Erfindung sowie vorteilhafte Ausführungsformen der Erfindung werden nachfolgend anhand der Figuren der Zeichnung im Einzelnen dargestellt und erläutert. Es zeigen:
- Fig. 1: eine schematisiert vereinfachte Darstellung einer Ausführung eines erfindungsgemäßen Abgasturboladers mit in das Turbinengehäuse integriertem Katalysatorsubstratblock, im Halbschnitt;
- Fig. 2 und 3: zwei unterschiedliche Ausführungen eines Katalysatorsubstratblocks in vereinfachter Darstellung;
- Fig. 4: eine stark vereinfachte Darstellung eines erfindungsgemäßen Hybridfahrzeugs mit Brennkraftmaschine, Elektromotor und einen erfindungsgemäßen Abgasturbolader.

Der hier dargestellte Abgasturbolader 1 weist einen Verdichter 30 mit einem Verdichtergehäuse 31 und eine Lagerbaugruppe 10 sowie eine von einem Abgasmassenstrom AM durchströmbare Turbine 20 mit einem Turbinengehäuse 21 auf, die zusammen entlang einer Turboladerachse 2 nebeneinander (in der Darstellung von links nach rechts), angeordnet sind.

In dem Verdichtergehäuse 31 ist ein Verdichterrad 13 angeordnet und in dem Turbinengehäuse 21 ist ein Turbinenrad 12 angeordnet. Das Verdichterrad 13 und das Turbinenrad 12 sind auf den sich gegenüberliegenden Enden einer Rotorwelle 14 drehfest angeordnet, bilden zusammen mit dieser den Turboladerrotor, der mit der Rotorwelle 14 in der Lagerbaugruppe 10 um die Turboladerachse 2, die gleichzeitig die Rotordrehachse darstellt und die axiale Richtung des Abgasturboladers 1 vorgibt, drehbar gelagert.

Das Turbinengehäuse 21 weist einen Abgaszuführstutzen 27, einen Abgasabführstutzen 28, der sich axial in Richtung der Turboladerachse 2 erstreckt, und einen das Turbinenrad 12 und den Abgasabführstutzen 28 in Bezug auf die Turboladerachse 2 umgreifenden Abgasringkanal 22 auf. Der Abgasringkanal 22 erstreckt sich in axialer Richtung über den Abgasabführstutzen 28 und umschließt diesen über seinen Außenumfang.

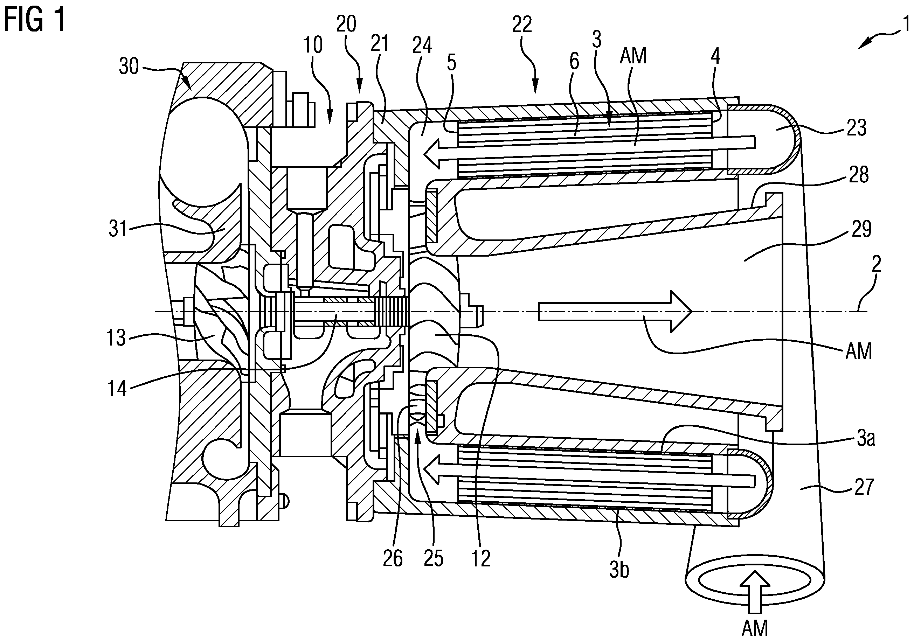

Bezogen auf den Abgasmassenstrom AM, der in Fig. 1 durch massive Pfeile dargestellt ist, stromaufwärts vor dem Turbinenrad 12 und stromabwärts des Abgaszuführstutzens 27 ist ein hier als Hohlzylinder ausgebildeter, hohlkörperförmiger Katalysatorsubstratblock 3, der auch als Ringkatalysator bezeichnet werden kann, derart im Abgasringkanal 22 in das Turbinengehäuse 21 integriert, dass er den Abgasringkanal 22 über seinen Umfang umlaufend ausfüllt und zusammen mit dem Abgasringkanal 22 den Abgasabführstutzen 28 umgreift.

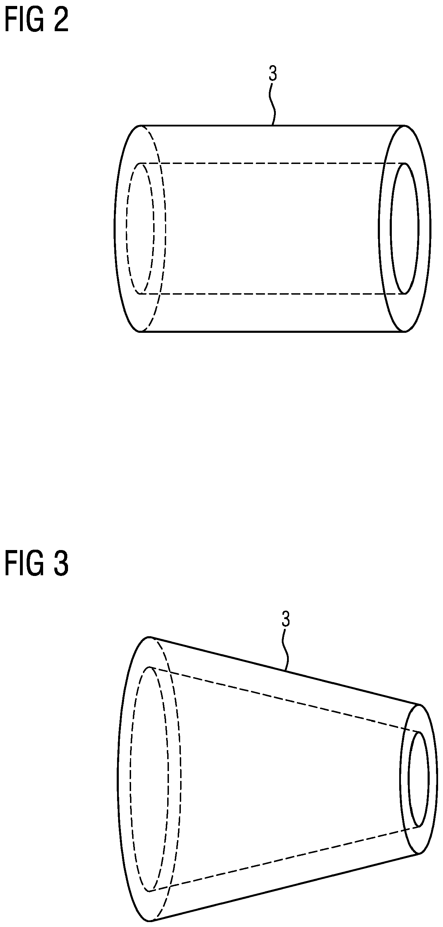

In Fig. 2 ist eine mögliche Form eines hohlkörperförmigen Katalysatorsubstratblocks 3, nämlich ein als gerader Hohlzylinder ausgebildeter Katalysatorsubstratblock 3 gezeigt.

In Fig. 3 ist eine weitere mögliche Form eines hohlkörperförmigen Katalysatorsubstratblocks 3, nämlich ein als Hohlkegelstumpf ausgebildeter Katalysatorsubstratblock 3 gezeigt.

Gemäß einer Ausführung des Abgasturboladers 1 ist im Abgasringkanal 22, stromaufwärts des Katalysatorsubstratblocks 3 ein Einlassringkanal 23 ausgebildet, an den der Abgaszuführstutzen 27 zur Einleitung des Abgasmassenstroms AM angeschlossen ist. Über den Einlassringkanal 23 wird bei dieser Ausführung der Abgasmassenstrom AM in den Abgasringkanal 22 aus tangentialer Richtung eingeleitet und über den Umfang der Einlassseite des Katalysatorsubstratblocks verteilt in den Katalysatorsubstratblock eingeleitet. Der Einlassringkanal 23 kann beispielsweise als Spiralkanal mit einem sich in Strömungsrichtung des Abgasmassenstroms AM verjüngenden Querschnitt ausgebildet sein, wie in der Fig.1 dargestellt. Dies entspricht in etwa der Geometrie einer in Turbinengehäusen gebräuchlichen Abgasvolute, mittels der das Abgas in einer spiralförmigen Bahn auf die Katalysatoreinlassseite 4 geführt wird. Dies ermöglicht vorteilhaft eine gleichmäßige Verteilung des Abgasmassenstromes AM über den Umfang der Katalysatoreinlassseite 4 und eine gleichmäßige Durchströmung des Katalysatorsubstratblocks.

Weiterhin ist bei dieser Ausführung im Abgasringkanal 22 stromabwärts des Katalysatorsubstratblocks 3 ein Einleitringkanal 24 ausgebildet, zur Überleitung des Abgasmassenstroms AM auf das Turbinenrad 12. Dies ermöglicht vorteilhaft eine gleichmäßige Verteilung des Abgasmassenstromes AM über den Umfang des Turbinenrads 12 sowie eine über den Umfang verteilte Einleitung des Abgasmassenstromes AM in den Abgasringspalt 25 zur Überleitung auf das Turbinenrad 12.

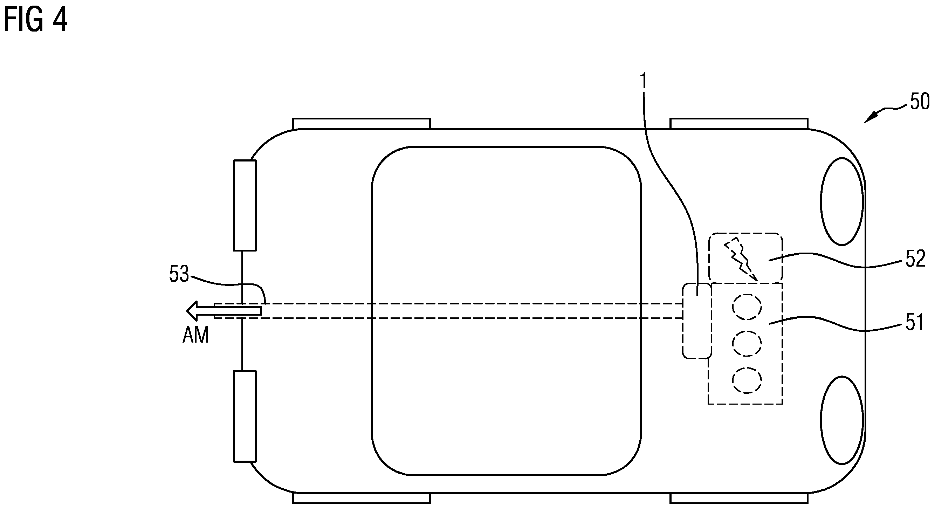

Die Strömungsrichtung und der Strömungsweg des Abgasmassenstromes AM durch das Turbinengehäuse 21 und den Katalysatorsubstratblock 3 ist durch massive Pfeile gekennzeichnet und verläuft in der Reihenfolge der Nennung durch den Abgaszuführstutzen 27 in den Einlassringkanal 23 und weiter durch den Katalysatorsubstratblock 3 in den Einleitringkanal 24 und von hier durch den Abgasringspalt 25 auf das Turbinenrad 12 und weiter durch den Strömungskanal 29 des Abgasabführstutzens 28 zum Beispiel in eine Abgasanlage eines Kraftfahrzeugs, beispielsweise eines Hybridfahrzeugs 50, wie in Fig. 4 dargestellt.

Nach dem Verlassen des Katalysatorsubstratblocks 3 auf dessen Katalysatorauslassseite 5 sammelt sich der gereinigte Abgasmassenstrom AM im Einleitringkanal 24 und passiert anschließend den umlaufenden Abgasringspalt 25, der eine Querschnittsverengung in überwiegend radialer Richtung auf das Turbinenrad 12 zu darstellt, und strömt von dort auf das Turbinenrad 12 und treibt dieses an. Vom Turbinenrad 12 wird das Abgas über den Abgasabführstutzen 28, der einen Strömungskanal 29 aufweist, der beispielsweise als Auslassdiffusor mit einem sich in Strömungsrichtung konisch erweiternden Querschnitt ausgebildet ist, in axialer Richtung abgeführt. Ein Verbindungsflansch am Ende des Abgasabführstutzen 28 dient zur Befestigung am Abgassystem der zugehörigen Brennkraftmaschine.

Gemäß einer weiteren Ausführung weist der Abtgasturbolader 1, wie ebenfalls beispielhaft in Fig. 1 dargestellt, einen Katalysatorsubstratblock 3 auf mit einer im Abgasmassenstrom AM stromaufwärts liegenden Katalysatoreinlassseite 4 und einer stromabwärts liegenden Katalysatorauslassseite 5, wobei zwischen der Katalysatoreinlassseite 4 und der Katalysatorauslassseite 5 verlaufende durchgehende Strömungskanäle 6 im Katalysatorsubstratblock 3 vorgesehen sind, deren Verlauf mit Bezug auf die Turboladerachse 2 eine axiale Komponente und eine Komponente in Umfangsrichtung des hohlkörperförmigen Katalysatorsubstratblocks 3 aufweist. Daraus ergibt sich ein mehr oder weniger spiralförmiger Verlauf der Strömungskanäle 6, sowie eine schräg zur Katalysatoreinlassseite 4 verlaufende Eintrittsrichtung und eine schräg zur Katalysatorauslassseite 5 verlaufende Austrittsrichtung für den Abgasmassenstrom.

Vorzugsweise sind die Strömungskanäle 6 auf der Katalysatoreinlassseite 4 in Umfangsrichtung entgegen der Strömungsrichtung des Abgasmassenstroms AM, also entgegen des Spiralverlaufs des Einlassringkanals 23 geneigt, wodurch die erforderliche Umlenkung und damit verbundene Strömungsverluste des Abgasmassenstroms beim Eintritt in den Katalysatorsubstratblock 3 reduziert werden. Unter Beibehaltung dieser Neigung verlaufen die Strömungskanäle 6 spiralförmig durch den Katalysatorsubstratblock 3 und verleihen dem Abgasmassenstrom AM auf der Katalysatorauslassseite 5 eine Strömungsrichtung, die eine mehr oder weniger große Richtungskomponente in Umfangsrichtung des Einleitringkanals 24, in den Abgasringspalt 25 hinein und auf das Turbinenrad 12. Durch diese Anordnung der Strömungskanäle 6 werden zum einen die Strömungsverluste des Abgasmassenstroms vorteilhaft reduziert und die Leistungsausbeute des Turbinenrads 12 erhöht und zum anderen wird die Länge des Strömungsweges durch den Katalysatorsubstratblock 3, dadurch vergrößert, so dass eine hohe Umwandlungsrate der Schadstoffe im Abgasmassenstrom AM gewährleistet ist. Mit anderen Worten wird bei dieser Ausführungsform die Struktur des Katalysatorsubstratblocks 3 benutzt, um die Anströmung und die Leistungsausbeute der Turbine sowie die Umwandlungsrate der Schadstoffe zu optimieren.

Bei einer weiteren Ausführung des Abgasturboladers 1 kann der hohlkörperförmige Katalysatorsubstratblock 3 selbst, wie auch in Fig. 1 dargestellt, ein Innenrohr 3a und ein den Katalysatorsubstratblock 3 auf seiner Außenseite umfassendes Außenrohr 3b aufweisen, die beispielsweise als gerade verlaufende Zylinderrohre oder als konisch verlaufende Rohre ausgebildet sind, je nach Ausführung des Katalysatorsubstratblocks. Das Innenrohr 3a begrenzt dabei den Katalysatorsubstratblock 3 zu seinem Innenhohlraum hin und das Außenrohr umfasst den Katalysatorsubstratblock 3 auf seiner Außenseite. Innenrohr 3a und Außenrohr 3b können mechanisch fest mit dem Katalysatorsubstratblock 3 verbunden sein und dienen vorteilhaft sowohl als mechanischer Schutz als auch zur Stabilisierung des Katalysatorsubstratblocks 3.

Bei einer weiteren Ausführungsform des Abgasturboladers 1 ist stromabwärts des Katalysatorsubstratblocks 3 im Übergang zwischen Abgasringkanal 22 und dem

Turbinenrad 12 eine Abgasringspalt 25 ausgebildet, in dem ein variabler Strömungsleitapparat 26 angeordnet ist. Ein solcher Strömungsleitapparat 26 einer Turbine ist auch als "Variable Turbinengeometrie" (VTG) bekannt und dient zur Steuerung des Abgasmassenstroms AM in Richtung auf das Turbinenrad 12 hin sowie zur Veränderung des Durchgangsquerschnitts des Abgasringspalts 25 zur vorteilhaften Anpassung der Leistung des Turboladers in transienten Betriebsbereichen der Brennkraftmaschine.

Eine weitere Ausführung des erfindungsgemäßen Abgasturboladers ist dadurch gekennzeichnet, dass der Abgasabführstutzen 28 des Turbinengehäuses 21, wie ebenfalls in Fig.1 dargestellt, als Auslassdiffusor mit einem sich in Strömungsrichtung des Abgasmassenstroms AM erweiternden Strömungskanal 29 ausgebildet ist. Der Abgasringkanal 22 des Turbinengehäuses und somit der darin integrierte Katalysatorsubstratblock umfassen den Abgasabführstutzen und somit den Auslassdiffusor. Im Auslassdiffusor entspannt sich der Abgasmassenstrom und der auf den Turbinenradauslass wirkende Abgasgegendruck wird vorteilhaft verringert.

Wie aus Fig. 1 ersichtlich lassen sich die Merkmale der vorgenannten einzelnen Ausführungsformen auch in Kombination mehrerer der Merkmale oder ihrer Gesamtheit in einem Abgasturbolader verwirklichen.

Die erfindungsgemäß vorgenommene Integration des Katalysatorsubstratblocks 3, insbesondere in Form eines Ringkatalysators, in das Turbinengehäuse 21 des Abgasturboladers 1 bringt eine Reihe von Vorteilen mit sich. Hierzu zählt vor allem die enge Nachbarschaft des Katalysators zu den Auslassventilen des Motors, so dass der Katalysator schneller anspricht und verbesserte Kaltstart- und Neustartemissionen erreicht werden. Des Weiteren wird, im Vergleich zu herkömmlichen Katalysatoren, ein höherer Druck innerhalb des Katalysatorsubstratblocks 3 erzielt und innerhalb des Katalysatorsubstratblocks 3 wird eine gute homogene Temperaturverteilung erreicht, die zu einer hohen Umwandlungsrate für die Schadstoffe des Abgasmassenstroms führt. Ferner wird eine reduzierte thermische Belastung der Turbine des Abgasturboladers erzielt. Darüber hinaus wird eine einfache und kostenreduzierte Bauweise erreicht.

In Fig. 4 ist symbolisch ein Hybridfahrzeug 50 gemäß der Erfindung dargestellt. Dieses weist eine Brennkraftmaschine 51 und einen Elektromotor 52 auf und ist dadurch gekennzeichnet, dass die Brennkraftmaschine 51 einen erfindungsgemäßen Abgasturbolader 1 gemäß einer der vorausgehend beschriebenen Ausführungen aufweist. An den Abgasturbolader 1 angeschlossen ist eine Abgasanlage 53 des Hybridfahrzeugs 50 zur Abführung des von Schadstoffen gereinigten Abgasmassenstroms AM.

Bei derartigen Hybridfahrzeugen findet eine Kombination aus einer herkömmlichen Brennkraftmaschine, insbesondere eines Verbrennungsmotors, und einem Elektromotor Verwendung. Typischerweise ist der elektrische Antrieb für niedrige Last und kurze Fahrstrecken zuständig, während der Verbrennungsmotor vorwiegend für höhere Lasten und große Strecken in Betreib genommen wird oder als sogenannter "Range Extender" zur Aufladung der Batterie operiert. Das bedeutet, dass der Betriebsbereich des Verbrennungsmotors im Vergleich zu Fahrzeugen mit reinem Verbrennungsantrieb in Hybridfahrzeugen vergleichsweise klein ist. Das bedeutet, dass das Übergangsverhalten (Transient Response) und das Drehmomentverhalten im unteren Bereich des Verbrennungsmotors für Hybridantriebe geringere Bedeutung besitzen, andererseits jedoch das Neustartvermögen und die Emissionen größere Bedeutung gewinnen.

Da somit bei Hybridantrieben die Anforderungen in Bezug auf das Übergangsverhalten (Transient Response) und das Drehmomentverhalten im unteren Bereich für den Verbrennungsmotor geringer sind, wird vorgeschlagen, die erfindungsgemäße Lösung der Katalysatoranordnung stromauf des Abgasturboladers bei derartigen Hybridfahrzeugen einzusetzen, um in Bezug auf die entsprechenden Emissionen besonders gute Ergebnisse zu erzielen. Für solche Hybridfahrzeuge ist daher die erfindungsgemäße Lösung besonders günstig, da im Vergleich zu Fahrzeugen mit Verbrennungsmotoren an Hybridfahrzeuge andere Anforderungen gestellt werden. Hier lässt sich daher die erfindungsgemäße Lösung besonders gut verwirklichen.

### Bezugszeichenliste

- 1: Abgasturbolader
- 2: Turboladerachse
- 3: Katalysatorsubstratblock
- 3a: Innenrohr
- 3b: Außenrohr
- 4: Katalysatoreinlassseite
- 5: Katalysatorauslassseite
- 6: Strömungskanäle
- 10: Lagerbaugruppe
- 12: Turbinenrad
- 13: Verdichterrad
- 14: Rotorwelle
- 20: Turbine
- 21: Turbinengehäuse
- 22: Abgasringkanal
- 23: Einlassringkanal
- 24: Einleitringkanal
- 25: Abgasringspalt
- 26: Strömungsleitapparat
- 27: Abgaszuführstutzen
- 28: Abgasabführstutzen
- 29: Strömungskanal des Abgasabführstutzens
- 30: Verdichter
- 31: Verdichtergehäuse
- 50: Hybridfahrzeug
- 51: Brennkraftmaschine
- 52: Elektromotor
- 53: Abgasanlage
- AM: Abgasmassenstrom

## Patentansprüche

1. Abgasturbolader (1) für eine Brennkraftmaschine (51) der einen Verdichter (30) und eine von einem Abgasmassenstrom (AM) durchströmbare Turbine (20) aufweist, die zusammen entlang einer Turboladerachse (2) angeordnet sind, wobei die Turbine (20) ein Turbinengehäuse (21) und ein im Turbinengehäuse (21) angeordnetes Turbinenrad (12) aufweist, und
wobei das Turbinengehäuse (21) einen Abgaszuführstutzen (27), einen Abgasabführstutzen (28), der sich axial in Richtung der Turboladerachse (2) erstreckt, und einen das Turbinenrad (12) und den Abgasabführstutzen (28) in Bezug auf die Turboladerachse (2) umgreifenden Abgasringkanal (22) aufweist, **dadurch gekennzeichnet,**
**dass** bezogen auf den Abgasmassenstrom (AM) stromaufwärts vor dem Turbinenrad (12) und stromabwärts des Abgaszuführstutzens (27) ein hohlkörperförmiger Katalysatorsubstratblock (3) derart im Abgasringkanal (22) in das Turbinengehäuse (21) integriert ist, dass er den Abgasringkanal (22) über seinen Umfang umlaufend ausfüllt und zusammen mit dem Abgasringkanal (22) den Abgasabführstutzen (28) umgreift.

2. Abgasturbolader (1) nach Anspruch 1, **dadurch gekennzeichnet, dass** im Abgasringkanal (22) stromaufwärts des Katalysatorsubstratblocks (3) ein Einlassringkanal (23) ausgebildet ist, an den der Abgaszuführstutzen (27) zur Einleitung des Abgasmassenstroms (AM) angeschlossen ist und dass im Abgasringkanal (22) stromabwärts des Katalysatorsubstratblocks (3) ein Einleitringkanal (24) ausgebildet ist, zur Überleitung des Abgasmassenstroms (AM) auf das Turbinenrad (12) .

3. Abtgasturbolader (1) nach Anspruch 1 oder 2, **dadurch gekennzeichnet, dass** der Katalysatorsubstratblock (3) eine im Abgasmassenstrom (AM) stromaufwärts liegenden Katalysatoreinlassseite (4) und eine stromabwärts liegende Katalysatorauslassseite (5) und zwischen der Katalysatoreinlassseite (4) und der Katalysatorauslassseite (5) verlaufende durchgehende Strömungskanäle (6) aufweist, deren Verlauf mit Bezug auf die Turboladerachse (2) eine axiale Komponente und eine Komponente in Umfangsrichtung des hohlkörperförmigen Katalysatorsubstratblocks (3) aufweist.

4. Abgasturbolader (1) nach einem der Ansprüche 1 bis 3, **dadurch gekennzeichnet, dass** der hohlkörperförmige Katalysatorsubstratblock (3) ein Innenrohr und ein den Katalysatorsubstratblock (3) auf seiner Außenseite umfassendes Außenrohr umfasst, zur Stabilisierung des Katalysatorsubstratblocks (3).

5. Abgasturbolader nach einem der vorangehenden Ansprüche, **dadurch gekennzeichnet, dass** stromabwärts des Katalysatorsubstratblocks (3) im Übergang zwischen Abgasringkanal (22) und dem Turbinenrad (12) eine Abgasringspalt (25) ausgebildet ist, in dem ein variabler Strömungsleitapparat (26) angeordnet ist.

6. Abgasturbolader nach einem der vorangehenden Ansprüche, **dadurch gekennzeichnet, dass** der Abgasabführstutzen (28) als Auslassdiffusor mit einem sich in Strömungsrichtung des Abgasmassenstroms (AM) erweiternden Strömungskanal (29) ausgebildet ist.

7. Hybridfahrzeug (50) mit Brennkraftmaschine (51) und Elektromotor (52), **dadurch gekennzeichnet, dass** die Brennkraftmaschine (51) einen Abgasturbolader (1) nach einem der vorangehenden Ansprüche aufweist.

## Claims

1. Exhaust gas turbocharger (1) for an internal combustion engine (51), which has a compressor (30) and a turbine (20) through which an exhaust gas mass flow (AM) can flow, which are disposed conjointly along a turbocharger axis (2), wherein the turbine (20) has a turbine housing (21) and a turbine wheel (12) disposed in the turbine housing (21), and
wherein the turbine housing (21) has an exhaust gas supply port (27), an exhaust gas discharge port (28) which extends axially in the direction of the turbocharger axis (2), and an exhaust gas ring duct (22) which in terms of the turbocharger axis (2) encompasses the turbine wheel (12) and the exhaust gas discharge port (28), **characterized in that**,
in terms of the exhaust gas mass flow (AM), upstream ahead of the turbine wheel (12) and downstream of the exhaust gas supply port (27), a hollow body-shaped catalyst substrate block (3) is integrated in the exhaust gas ring duct (22) into the turbine housing (21) in such a manner that it fills the exhaust gas ring duct (22) so as to encircle the circumference of the latter and conjointly with the exhaust gas ring duct (22) encompasses the exhaust gas discharge port (28).

2. Exhaust gas turbocharger (1) according to Claim 1, **characterized in that** an inlet ring duct (23) is formed in the exhaust gas ring duct (22) upstream of the catalyst substrate block (3), to which inlet ring duct the exhaust gas supply port (27) for introducing the exhaust gas mass flow (AM) is connected, and **in that** an inlet ring duct (24) is formed in the exhaust gas ring duct (22) downstream of the catalyst substrate block (3) for the transfer of the exhaust gas mass flow (AM) to the turbine wheel (12).

3. Exhaust gas turbocharger (1) according to Claim 1 or 2, **characterized in that** the catalyst substrate block (3) has a catalytic converter inlet side (4) lying upstream in the exhaust gas mass flow (AM) and a catalytic converter outlet side (5) lying downstream, and has continuous flow ducts (6) running between the catalytic converter inlet side (4) and the catalytic converter outlet side (5), the profile of which flow ducts in terms of the turbocharger axis (2) has an axial component and a component in the circumferential direction of the hollow body-shaped catalyst substrate block (3).

4. Exhaust gas turbocharger (1) according to one of Claims 1 to 3, **characterized in that** the hollow body-shaped catalyst substrate block (3) comprises an internal tube and an external tube encompassing the catalyst substrate block (3) on the outside of the latter, so as to stabilize the catalyst substrate block (3).

5. Exhaust gas turbocharger according to one of the preceding claims, **characterized in that** an exhaust gas ring gap (25) is formed downstream of the catalyst substrate block (3) in the transition between the exhaust gas ring duct (22) and the turbine wheel (12), in which exhaust gas ring gap a variable flow control apparatus (26) is disposed.

6. Exhaust gas turbocharger as claimed in one of the preceding claims, **characterized in that** the exhaust gas discharge port (28) is designed as an outlet diffuser with a flow duct (29) which widens in the direction of flow of the exhaust gas mass flow (AM).

7. Hybrid vehicle (50) with an internal combustion engine (51) and an electric motor (52), **characterized in that** the internal combustion engine (51) has an exhaust gas turbocharger (1) according to one of the preceding claims.

## Revendications

1. Turbocompresseur à gaz d'échappement (1) pour un moteur à combustion interne (51), qui présente un compresseur (30) et une turbine (20) pouvant être traversée par un flux massique de gaz d'échappement (AM), qui sont agencés ensemble le long d'un axe de turbocompresseur (2), la turbine (20) présentant un boîtier de turbine (21) et une roue de turbine (12) agencée dans le boîtier de turbine (21), et
le boîtier de turbine (21) présentant une tubulure d'amenée de gaz d'échappement (27), une tubulure d'évacuation de gaz d'échappement (28) qui s'étend axialement dans la direction de l'axe de turbocompresseur (2), et un canal annulaire de gaz d'échappement (22) entourant la roue de turbine (12) et la tubulure d'évacuation de gaz d'échappement (28) par rapport à l'axe de turbocompresseur (2), **caractérisé en ce que** par rapport au flux massique de gaz d'échappement (AM), un bloc de substrat de catalyseur (3) en forme de corps creux est intégré dans le boîtier de turbine (21) dans le canal annulaire de gaz d'échappement (22) en amont avant la roue de turbine (12) et en aval de la tubulure d'amenée de gaz d'échappement (27) de telle sorte qu'il remplit le canal annulaire de gaz d'échappement (22) circonférentiellement sur sa périphérie et entoure la tubulure d'évacuation de gaz d'échappement (28) conjointement avec le canal annulaire de gaz d'échappement (22).

2. Turbocompresseur à gaz d'échappement (1) selon la revendication 1, **caractérisé en ce qu'**un canal annulaire d'entrée (23) est réalisé dans le canal annulaire de gaz d'échappement (22) en amont du bloc de substrat de catalyseur (3), auquel est raccordée la tubulure d'amenée de gaz d'échappement (27) pour l'introduction du flux massique de gaz d'échappement (AM) et **en ce qu'**un canal annulaire d'introduction (24) est réalisé dans le canal annulaire de gaz d'échappement (22) en aval du bloc de substrat de catalyseur (3) pour transférer le flux massique de gaz d'échappement (AM) à la roue de turbine (12) .

3. Turbocompresseur à gaz d'échappement (1) selon la revendication 1 ou 2, **caractérisé en ce que** le bloc de substrat de catalyseur (3) présente un côté d'entrée de catalyseur (4) situé en amont dans le flux massique de gaz d'échappement (AM) et un côté de sortie de catalyseur (5) situé en aval et des canaux d'écoulement continus (6) s'étendant entre le côté d'entrée de catalyseur (4) et le côté de sortie de catalyseur (5), dont le tracé présente, par rapport à l'axe de turbocompresseur (2), une composante axiale et une composante dans la direction périphérique du bloc de substrat de catalyseur (3) en forme de corps creux.

4. Turbocompresseur à gaz d'échappement (1) selon l'une quelconque des revendications 1 à 3, **caractérisé en ce que** le bloc de substrat de catalyseur (3) en forme de corps creux comprend un tube intérieur et un tube extérieur englobant le bloc de substrat de catalyseur (3) sur son côté extérieur, pour stabiliser le bloc de substrat de catalyseur (3).

5. Turbocompresseur à gaz d'échappement selon l'une quelconque des revendications précédentes, **caractérisé en ce qu'**en aval du bloc de substrat de catalyseur (3), dans la transition entre le canal annulaire de gaz d'échappement (22) et la roue de turbine (12), il est réalisé une fente annulaire de gaz d'échappement (25) dans laquelle est agencé un appareil de guidage d'écoulement variable (26).

6. Turbocompresseur à gaz d'échappement selon l'une quelconque des revendications précédentes, **caractérisé en ce que** la tubulure d'évacuation de gaz d'échappement (28) est réalisée sous forme de diffuseur de sortie avec un canal d'écoulement (29) s'élargissant dans la direction d'écoulement du flux massique de gaz d'échappement (AM).

7. Véhicule hybride (50) avec un moteur à combustion interne (51) et un moteur électrique (52), **caractérisé en ce que** le moteur à combustion interne (51) présente un turbocompresseur à gaz d'échappement (1) selon l'une quelconque des revendications précédentes.
